# DEMANDE DE BREVET EUROPEEN

(11) **EP 1 076 018 A1**
(43) Date de publication de la demande: **14.02.2001**
(21) Numéro de dépôt: 00402269.5
(22) Date de dépôt: 11.08.2000
(51) Int. Cl.: B65G 7/12

(54) **Dispositif destiné à tenir et à transporter en suspension avec réduction d'effort les bagages et paquets d'une seule main**

(30) Priorité: 13.08.1999 FR 9910467
(71) Demandeur: LaFaye, Jean-Claude, 92260 Fontenay aux Roses (FR)
(72) Inventeur: LaFaye, Jean-Claude, 92260 Fontenay aux Roses (FR)

(57) **Abrégé**

Dispositif destiné à tenir et à transporter en suspension avec réduction d'effort les bagages et paquets d'une seule main,constitué d'une poignée(13) tenue par la main,d'une partie de maintien(9) de l'objet équipé d'un crochet(10) de suspension des paquets(18) et d'un élément de liaison souple(1) relié à une extrémité à la poignée et à l'autre extrémité à l'aide d'un mousqueton à axe rotatif(2) à une sangle(22) supportée par le corps montée soit en bandoulière (Pf1) soit en ceinture(Pf2).

La poignée est montée sur un support(6) comportant un passant(5) monté déplaçable sur toute la longueur de l'élément de liaison souple et auto-bloquant à la hauteur voulue,commandable à volonté,et formant sous celui-ci au moins une boucle(8) coulissante dans un passant(15) de la partie de maintien(9).

## Description

Le transport de paquets,sacs,bagages,sans toucher le sol,tenus par une seule main, pose des problèmes d'effort de traction supportés par la main,le bras et l'épaule, créant un déséquilibre du corps et une déformation temporaire de la colonne vertébrale lors de la marche.

L'idée pour diminuer ces efforts est de faire contribuer le "reste du corps" au partage de ceux-ci en trouvant un point d'appui fixe sur le corps.
Dans ce domaine il est connu du brevet français FR n° 2700930 un dispositif constitué d'une sangle réglable passée en bandoulière dont les deux brins d'éxtrémité sont reliés et maintenus espacés par une sangle horizontale dont les extrémités maintiennent un profilé en L formant crochet supportant les paquets à transporter, sur lequel est fixée une poignée destinée à être tenue par la main, mais cette réalisation représente trois inconvénients:
- Le réglage de la hauteur de la sangle influe directement sur la répartition de la charge entre la sangle et la main.Si ce réglage est trop long,tout l'effort est supporté par la main, s'il est trop court tout l'effort est supporté par la sangle.Le réglage est pointu et délicat à mettre en oeuvre.
- Il en est de même lorsque l'on doit soulever la charge ponctuellement pour passer un obstacle(cas d'une marche d'escalier par exemple)et dans le cas de charges volumineuses qui imposent que le bras ne soit pas tendu.
L'effort supporté par la main est alors maximum.
- La disposition et le maintien de la poignée étant figés (parallèle au corps) ne permettent pas la préhension correcte des paquets dont la anse est perpendiculaire au corps.
La présente invention permet de résoudre ces problèmes et en particulier de réduire effectivement de moitié l'effort supporté par la main et de procurer d'autres fonctions au dispositif.

Ainsi elle vise un dispositif destiné à tenir et à transporter d'une seule main, au moins un paquet en suspension, sans qu'il touche le sol, avec réduction d'effort supporté par la main et le bras de transport du type constitué:
- d'une poignée destinée à être tenue par la main,
- d'une partie de maintien de l'objet à transporter et
- d'un élément de liaison souple relié à une extrémité à la poignée et à l'autre extrémité à une sangle destinée à être supportée par une partie du corps.

La partie de maintien de l'objet est indépendante de la poignée et est pourvue de moyens de guidage lui permettant de coulisser librement sur l'élément de liaison souple et en ce que l'élément de liaison souple présente une longueur telle que cet élément définisse au moins une boucle ouverte orientée vers le bas au fond de laquelle vient s'autopositionner la partie de maintien de l'objet à supporter entre le brin descendant pourvu de moyens d'attache au corps de l'utilisateur et du brin remontant pourvu en extrémité de la poignée de sorte que par effet de démultiplication l'effort appliqué au niveau de la poignée soit de moitié de celui de l'objet à transporter.

Selon un mode de réalisation la poignée est montée sur un support comportant un passant monté déplaçable sur la longueur de l'élément de liaison souple unique de sorte que ce dernier définisse alors sous ce passant,au moins une boucle ouverte.

Ledit passant peut comporter des moyens de blocage sur l'élément de liaison souple,à la hauteur voulue sur ce dit élément,commandable à volonté lorsque l'utilisateur veut libérer sa main de la poignée.
Selon d'autres particularités propres à ce mode de réalisation:

Le support de poignée forme un passant auto-bloquant sur l'élément de liaison souple grâce à une ouverture comportant une face inclinée ou décalée du côté intérieur compris entre les faces intérieures des parties descendante et remontante de l'élément de liaison souple avec une partie en pointe se terminant sur la face inférieure du support,et du côté extérieur une face arrondie lisse venant en contact avec la face extérieure de la partie descendante de l'élément de liaison souple.
La poignée est montée sur le support de façon pivotante autour d'un axe et l'extrémité de l'élément de liaison souple est reliée dans sa partie remontante à la poignée par l'intermédiaire d'une attache définie notamment par un repli formant une boucle cousue reçue sur un deuxième axe solidaire du support.

Les axes de la poignée et de support de l'extrémité remontante de l'élément de liaison souple sont distincts et disposés parallèlement l'un par rapport à l'autre et l'axe articulé de la poignée est monté en extrémité du support de sorte à former cette partie du support sous forme d'un bras de levier articulé pivotant par rapport à l'axe de fixation de la boucle de la partie remontante de l'élément de liaison souple de façon à positionner le support tel que son passant présente une ouverture libre maximum à la partie descendante de l'élément de liaison souple lorsque l'on tire la poignée.

En variante , les axes d'articulation de la poignée et de la boucle de la partie remontante de l'élément de liaison souple sont reçus sur des axes confondus de sorte que le support présente en partie supérieure un prolongement situé au dela des dits axes de façon décalée latéralement par rapport au plan du support servant d'appui aux doigts pour provoquer le basculement du support en position d'autoblocage.

Le passant du support est bordé du côté extérieur en vis à vis du corps de l'utilisateur, en position décalée latéralement, par un bord arrondi obtenu par exemple par moulage ou par un tube ou par un enroulé de tôle pour permettre au support de ne pas accrocher les vêtements lors du tirage.

Le moyen de guidage de la partie de maintien de l'objet est constitué d'un passant dont les bords sont de forme arrondie lisse et prolongé à sa base par un crochet permettant de fixer les paquets à transporter. Ledit crochet peut être réalisé en fil cylindrique métallique soudé, relié à ses extrémités supérieures à un tube cylindrique métallique constituant la partie de maintien de l'objet et pourvu dans ce cas d'un passant formé par une tige cylindrique métallique droite espacée du tube et soudée de chaque côté au fil définissant le crochet.
L'élément de liaison souple comporte dans sa partie supérieure située dans le cas du mode de réalisation précédent au dessus du passant du support de poignée une boucle fermée permettant la réception d'une sangle utilisable en bandoulière ou en ceinture par l'intermédiaire soit d'un mousqueton avec anneau et passant, soit de deux épingles avec anneaux enchevêtrés et passant,ajustable en longueur par une double boucle permettant de régler la hauteur du support et par suite de la poignée de sorte à ce qu'elle corresponde à celle de la main de l'utilisateur, ou présenter une longueur suffisante de sorte à définir une grande boucle fermée formant elle même sangle bandoulière munie de préférence d'une patte d'épaule et pourvue, dans chaque cas, à son extrémité opposée à celle rattachée au support, d'une double boucle de fermeture montée réglable le long du dit élément de liaison souple.

La sangle, lorsqu'elle est indépendante de l'élément de liaison souple, est équipée d'une boucle à fermeture rapide munie d'un passant de réglage permettant d'ajuster en hauteur le point d'appui fixe compris entre l'aisselle et la hanche lors d'une utilisation en bandoulière ,et possède une patte d'épaule et un passant ou coulant simple pour maintenir le brin libre de la sangle, et est réalisée en matériau de type coton ou synthétique strié ayant une bonne adhérence au contraire de l'élément de liaison souple réalisé en fils de polyester du type utilisé sur les ceintures de sécurité automobile, de sorte à présenter un très bon coefficient de glissement par rapport au passant du crochet et du passant du support.

Dans le cas où la sangle est constituée directement d'une ceinture ou d'un bord supérieur de pantalon de l'utilisateur, la partie supérieure de l'élément de liaison souple sortant du passant du support de poignée comporte un crochet ouvert vers le bas sous forme de pince destiné à venir s'accrocher à cheval sur la dite ceinture ou sur le dit bord supérieur de pantalon ,et pourvu en partie inférieure d'un double passant défini par quatre barrettes dans lesquelles l'élément de liaison souple est maintenu de façon réglable permettant d'ajuster la hauteur de la poignée et le cas échéant de son support.
Dans sa version simplifiée ne comportant pas de support de poignée avec passant, le dispositif peut être applicable à la réalisation de sacs d'écoliers,de porte- documents,de sacs et de valises,dans ce cas le système est intégré extérieurement au bagage, la partie formant poignée dudit bagage est conformée de sorte à constituer le passant de la partie de maintien, par laquelle passe l'élément de liaison souple dont l'extrémité pourvue de la poignée destinée à être tenue à la main vient en butée sur un des côtés dudit passant tandis que son autre extrémité destinée à être reliée à une sangle par exemple par crochet à une ceinture,supportée par une partie du corps de l'utilisateur est attachée à la surface dudit bagage par exemple par agrafage de façon à ce que l'élément de liaison souple soit tendu en position de non utilisation du système et désagrafé lorsque le bagage est maintenu suspendu entre la poignée et l'extrémité de l'élément de liaison souple rattachée au corps.

Selon un autre mode simplifié de réalisation de l'invention ne comportant pas de support de poignée et de moyens d'autoblocage sur celui-ci, la partie de maintien de l'objet comporte au niveau de ses moyens de guidage en coulissement sur l'élément de liaison souple, des moyens d'autoblocage en position sur ledit élément s'opposant à sa descente dans le cas où la poignée est relachée par l'utilisateur par effet de coincement et friction.

Selon encore un autre mode simplifié de réalisation l'élément de liaison souple comporte sur la longueur de son brin descendant d'un élément d'attache pourvu du côté extérieur d'un passant large dans lequel passe librement le brin remontant vers la poignée de l'élément de liaison souple, ladite poignée étant pourvue à sa base de moyens destinés à venir en butée sur le bord supérieur dudit passant, lorsque la poignée est relachée par l'utilisateur constituant ainsi un moyen de blocage en position de la partie de maintien de l'objet. Dans ce cas on peut prévoir que l'élément d'attache du passant large est réglable en position sur le brin descendant et est par exemple constitué d'un passant double défini par 3 barrettes dans lesquelles est enfilé le brin descendant de l'élément de liaison souple. Une description plus détaillée de l'invention va être faite en référence aux dessins joints qui représentent:
Figure 1:une vue schématique du dispositif en position d'utilisation.
Figure 2:une vue en perspective du dispositif selon un 1er mode de réalisation préféré non limitatif, avec système de blocage.
Figure 2a: une vue de deux épingles pouvant remplacer le mousqueton
Figures 3a et 3b:des vues en coupe respectivement du support de poignée sur l'élément de liaison souple en position de tirage et en position de blocage.

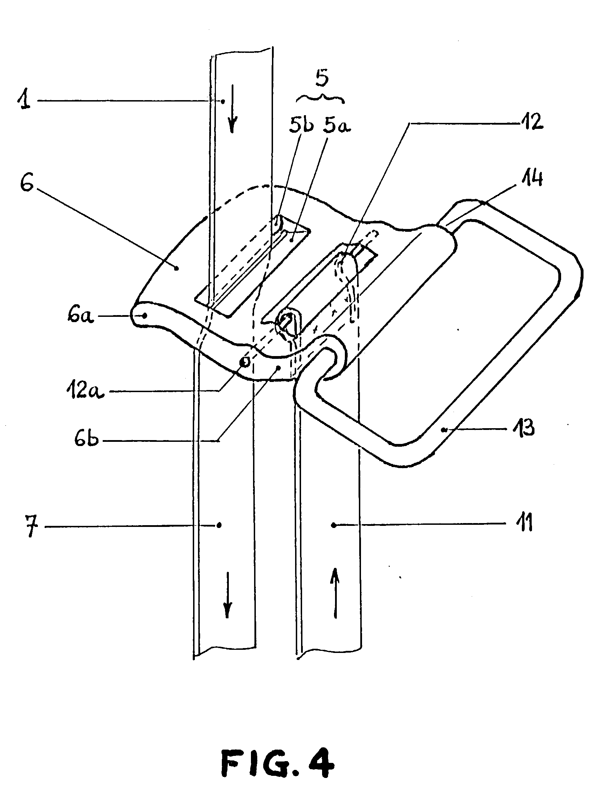

Figure 4: une vue en perspective du support équipé de la poignée avec la fixation de l'éxtrémité de l'élément de liaison souple et la partie descendante en position de blocage.
Figure 5a et 5b: une vue de la partie de maintien de l'objet et une vue en coupe du crochet avec une variante de sa fabrication en Figure 5c.
Figure 6a et 6b: des vues d'une variante de réalisation du blocage de l'élément de liaison souple sur un support de poignée en position de tirage et position de blocage.
Figure 7: une vue d'une variante de réalisation du dispositif utilisant plusieurs renvois de boucles.
Figure 8: une vue d'une variante de réalisation d'un dispositif utilisant une poulie et une corde.
Figures 9a et 9b: deux vues d'une variante de réalisation du support de poignée en métal en position de tirage et de blocage.
Figure 10: une vue en perspective du support de poignée en métal.
Figures 11a et 11b: une vue de profil et de dessus du support de poignée en fabrication mixte (plastique + métal).
Figure 12: une vue du dispositif dont l'élément de liaison souple forme bandoulière.
Figure 13: une vue en perspective d'un crochet en métal.
Figures 14a et 14b: une vue en perspective et en profil d'un crochet de fixation par l'extérieur à une ceinture.
Figure 15: une vue du dispositif de base sans blocage et sans support de poignée avec passant.
Figure 16: une vue du dispositif de base avec crochet autobloquant.
Figures 17a,17b,17c,17d: des vues du dispositif monté sur un sac d'écolier et des vues des differents types de fixation de l'élément de liaison souple.
Figure 18: une vue du dispositif de base dans lequel le brin descendant de l'élément de liaison souple est pourvu d'un passant réglable et de guidage du brin remontant.

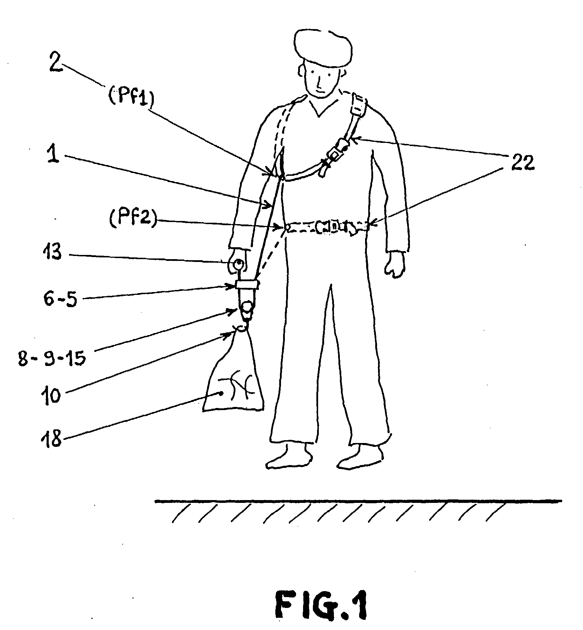

### LE DISPOSITIF COMPORTE EN REFERENCE AUX FIGURES 1 A 14 :

Un élément de liaison souple(1) fixé à une sangle support(22) passée en bandoulière et munie d'une patte d'épaule (25) ou en ceinture par l'intermédiaire d'un mousqueton à axe rotatif(2) prisonnier d'une boucle fermée (16) formée par une boucle de réglage(3).

La sangle support(22) est équipée d'un anneau(20) en demi cercle fixé sur un passant(21) coulissant dans celle-ci.Le réglage de la hauteur du point d'appui fixe(Pf1) à l'aplomb du bras et situé entre l'aisselle et la hanche(Pf2) se fait à l'aide d'un passant de réglage(23) montée sur la boucle à fermeture rapide (24). Un passant ou coulant simple (19) maintient le brin libre de la sangle.
Le parcours de l'élément de liaison souple(1) est le suivant:

A partir du mousqueton:
Il desçend le long de la jambe(4), traverse le passant(5) du support de poignée(6), continue de descendre(7) pour former une boucle ouverte (8) à travers un passant(15) de la partie de maintien(9) de l'objet qui comporte à sa base un crochet(10) permettant de fixer les paquets(18) à transporter.
L'élément de liaison souple remonte(11) après la boucle(8) pour être relié à son extrémité au moyen d'une boucle fermée cousue(12) autour d'un axe(12a) fixé sur le support(6).

### TROIS PARTICULARITES SONT A PRECISER:

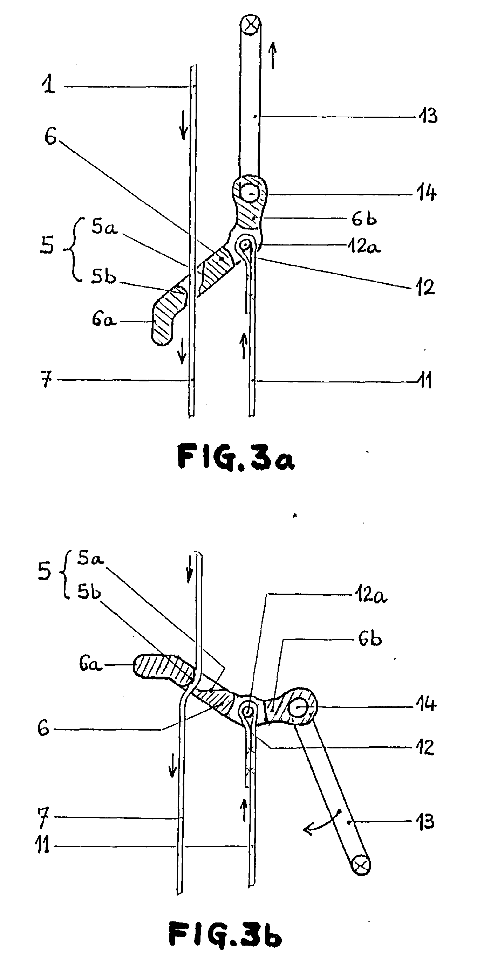

1) L'orientation de l'élément de liaison souple(1) obtenue par l'intermédiaire de l'axe rotatif du mousqueton(2) permet de positionner celui-ci de telle façon que le crochet(10) puisse accrocher aussi bien les paquets dont l'anse est parallèle ou perpendiculaire au corps.
2) Le passant(5) du support(6) de poignée possède une ouverture dont l'une de ses faces est inclinée(5a) par rapport aux faces du support qui se termine en pointe sur la face inférieure et l'autre face arrondie lisse(5b) comme représenté aux Figures 3a et 3b.Lorsque l'on tire sur la poignée, le support(6) s'incline grâce au levier formé par l'axe(14) de la poignée à travers la partie déportée (6b) autour de l'articulation de l'axe(12a) de fixation de la boucle(12) de la partie remontante(11) et présente une ouverture maximum du passant(5) entre la face inclinée(5a) et la face arrondie lisse(5b) permettant à l'élément de liaison souple de coulisser librement (le bord arrondie(5b) facilite ce glissement).D'autre part la partie coudée avant(6a) du support(6) se positionne parallèle au corps et ne gêne pas la circulation de celui-ci.Dès lors que l'on rabat le support(6) vers l'extérieur du corps en formant bascule entre la poignée et deux doigts de la main passés en dessous de la partie(6b) de celui-ci la pointe de la face inclinée(5a) du passant(5) vient bloquer la face intérieure de la partie descendante(7) de l'élément de liaison souple sur la face arrondie lisse(5b) immobilisant celui-ci.Ainsi on obtient un passant auto-bloquant évitant que les paquets suspendus au crochet ne redescendent,et rendant la main disponible pour tout autre usage.La partie coudée avant(6a) du support(6) de poignée vient se positionner à l'horizontale ce qui permet à celle-ci de prendre appui sur la hanche ou sur la partie du corps où est située la main,consolidant ainsi le blocage complet de l'élément de liaison souple(1).La poignée articulée sur son axe(14) peut se rabattre jusqu'à toucher le brin remontant(11) pour éviter toute gêne extérieure.Le poids total des paquets est alors supporté entièrement par le point d'appui fixe sur le corps. Cela permet momentanément de ne pas poser les paquets sur le sol s'il est mouillé ou sale par exemple et de pouvoir utiliser la main pour ouvrir une porte ou prendre son courrier par exemple.

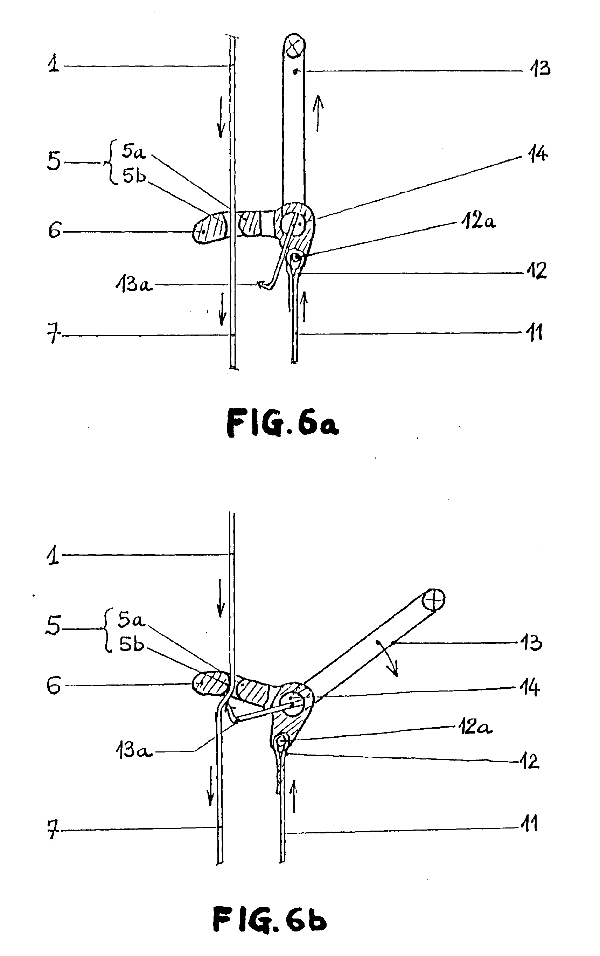

Une variante du système de blocage de l'élément de liaison souple est réalisable avec un support de poignée modifié.
(Une illustration en est faite Figure 6a en position de tirage et en Figure 6b en position de blocage)
Le passant (5) possède une ouverture avec deux faces arrondies (5a et 5b).En configuration de soutien manuel du support (6) disposé horizontalement,l'axe (14) de la poignée et l'axe(12a) de fixation de la boucle(12) de la partie remontante (11) de l'élément de liaison souple sont alignés à la verticale.Dans le centre de l'axe(14) de la poignée une pièce à bord cranté en forme d'équerre(13a) y est fixée solidairement et positionnée en dessous du support,entre la partie remontante(11) et descendante(7) de telle façon qu'elle soit écartée de la face intérieure de la partie descendante(7) lorsque la poignée est tirée et telle que son bord cranté vienne se rabattre sur la partie inférieure de la face intérieure descendante(7) provoquant le blocage de celle-ci lorsque l'on rabat la poignée vers l'extérieur du corps.

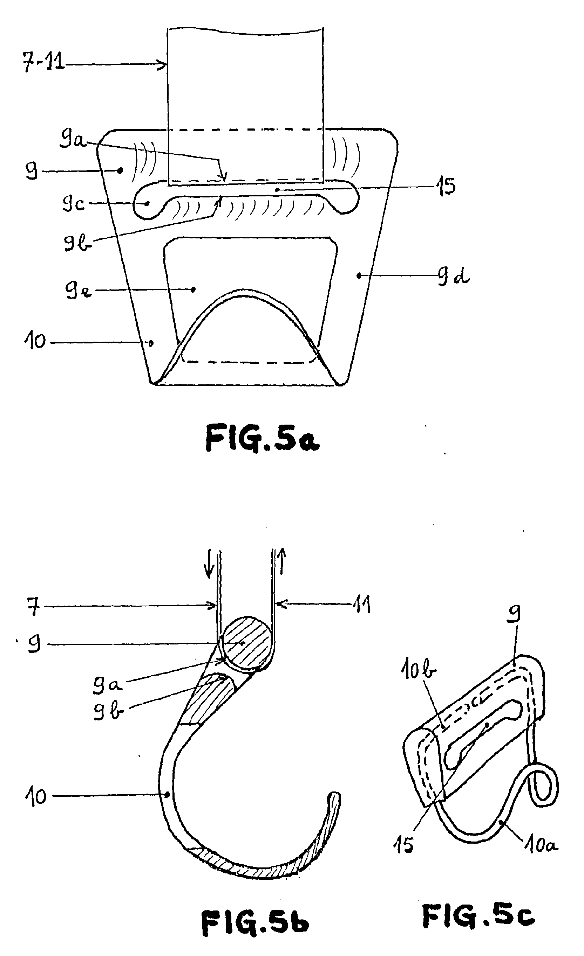

La partie de maintien(9) de l'objet par exemple peut être constituée d'une tôle métal(9d) surmoulée de plastique de forme arrondie,munie d'un passant(15) aux bordures arrondies lisses(9a-9b) dans lequel circule librement la boucle(8) de l'élément de liaison souple(1).Les deux extrémité du passant se terminent par une boucle aux bords arrondis(9c) rejoignant les deux bordures(9a-9b) permettant le recentrage de l'élément de liaison souple lorsque celui-ci prend une inclinaison, évitant ainsi son blocage.
En outre la tôle métal(9d) forme un crochet(10)dans laquelle on a pratiqué un évidement(9e) pour alléger l'ensemble, comme représenté aux Figures 5a et5b.Un autre mode de fabrication du crochet consiste à le faire en fil métallique cylindrique (10a) dont l'axe(10b) soit prisonnier d'un surmoulage plastique constituant la partie(9) avec son passant(15) comme représenté en Figure 5c.Le diamètre de la partie de maintien(9) de l'objet formant la boucle(8) est de dimension telle qu'il permet lorsque l'on tire sur la poignée d'obtenir des bords parallèles entre les parties descendante(7) et remontante(11) de l'élément de liaison souple(1)

La hauteur du dispositif est réglable par la boucle de réglage(3) située sur la partie descendante(4) après le point d'appui fixe (Pf1-Pf2) de façon que la position de la poignée coïncide avec la hauteur de la main lorsqu'on laisse pendre le bras le long du corps et que la boucle(8) est réduite au maximum,c'est à dire que le support de poignée(6) est au plus près de la partie de maintien(9) de l'objet.
Après accrochage des paquets au crochet(10) il suffit de monter ou de descendre la poignée pour ajuster la position à la marche et faire partager le poids de ceux-ci entre le corps et la main.
L'effort ainsi supporté par la main est réduit de moitié.

Le transport des paquets volumineux oblige à écarter le bras vers l'extérieur du corps pour éviter que ceux-ci touchent les jambes et entravent la marche. D'autre part on a tendance à les balancer avec le bras à partir du point d'articlation du coude ou de l'aisselle.Si l'on veut épouser au plus près la direction du bras avec la trajectoire de l'élément de liaison souple venant du point d'appui fixe et allant à la poignée, on a interêt à choisir un point situé le plus haut vers l'aisselle.L'effort nécessaire à l'écartement des paquets vers l'extérieur du corps sera moindre que si celui-ci se situe au niveau de la hanche du fait que l'angle formé par l'élément de liaison souple est plus proche de la verticale contribuant ainsi davantage à supporter l'effort.
Le point d'appui fixe sur le corps à l'aplomb du bras de transport peut donc se situer entre l'aisselle et la hanche. Une sangle bouclée, réglable, à fermeture rapide peut être passée en bandoulière ou en ceinture.Celle-ci possède un passant munie d'une boucle en demi cercle permettant d'accrocher le mousqueton de l'élément de liaison souple. En conclusion le dispositif selon l'invention est adaptable à tous les cas de figure.

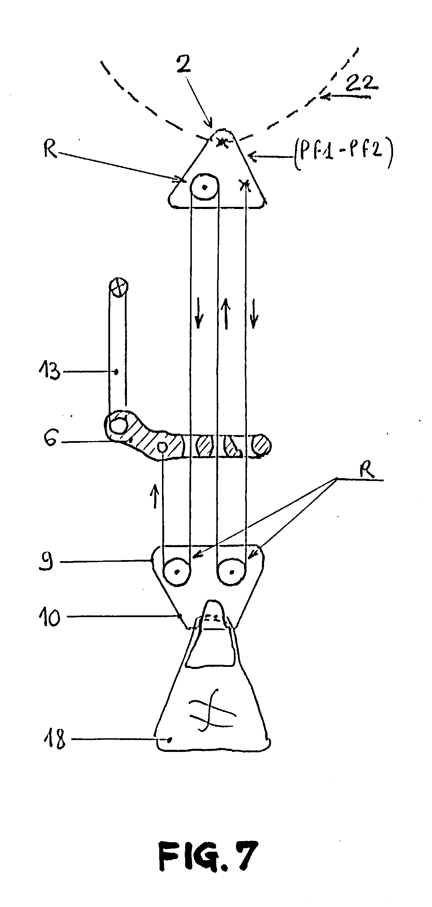

Par extension au dispositif décrit dans l'invention on pourrait concevoir un dispositif réduisant plus que la moitié l'effort supporté par la main en utilisant plusieurs renvois de l'élément de liaison souple.
(Une illustration en est faite Figure 7 pour un effort réduit par quatre supporté par la main; le nombre de renvoi étant de trois)
Cette solution n'est pas la solution préférée de l'invention car le déplacement de la poignée est trop importante pour un petit déplacement en hauteur de l'objet.Le dispositif est trop assisté et non perfectible mais reste possible dans le cadre de l'invention.

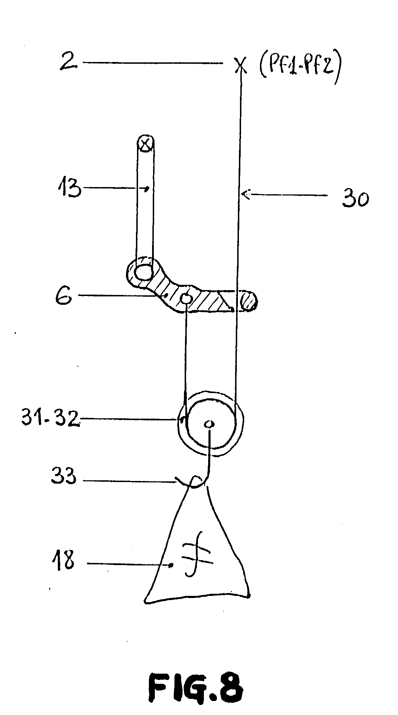

Un autre dispositif pourrait obtenir les mêmes résultats que l'invention.
(Une illustration en est faite Figure 8)
On pourrait utiliser une corde(30) avec au moins un renvoi(31) sur une poulie(32) montée coulissante sur la corde et munie d'un crochet(33).
Cette solution n'est pas non plus la solution préférée de l'invention car la poulie est un élément mobile susceptible d'accrocher les vêtements, de se bloquer ou de sauter.D'autre part les bords de l'ouverture du passant doivent être suffisamment résistants pour éviter une usure prématurée due à l'échauffement provoqué par le frottement de la corde ,ou bien utiliser deux rouleaux mobiles.En outre en position de blocage la stabilité de la position des paquets est incertaine compte tenu de la rotation de la corde.
Cette solution est toutefois envisageable dans le cadre de l'invention .

### Selon une autre variante:

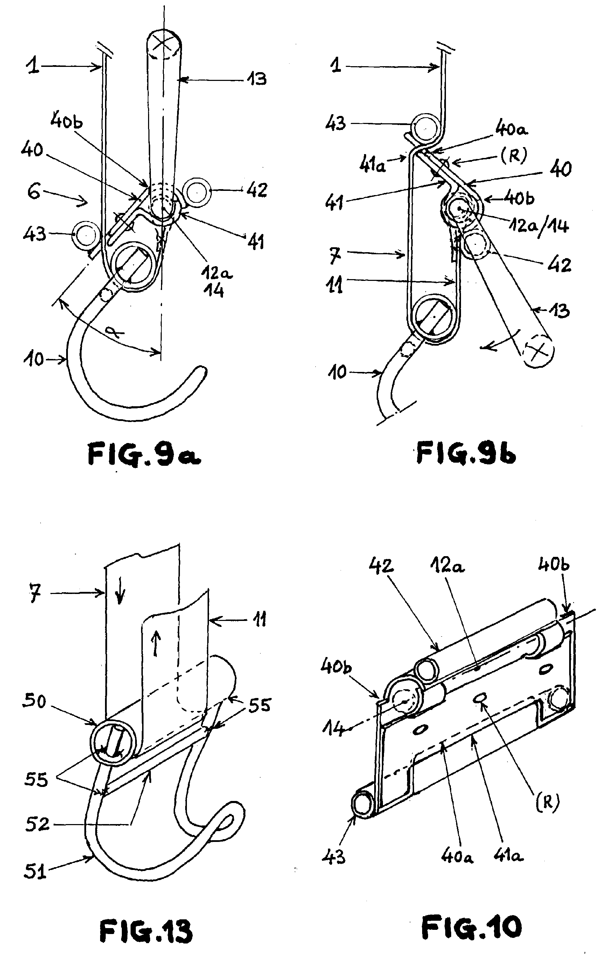

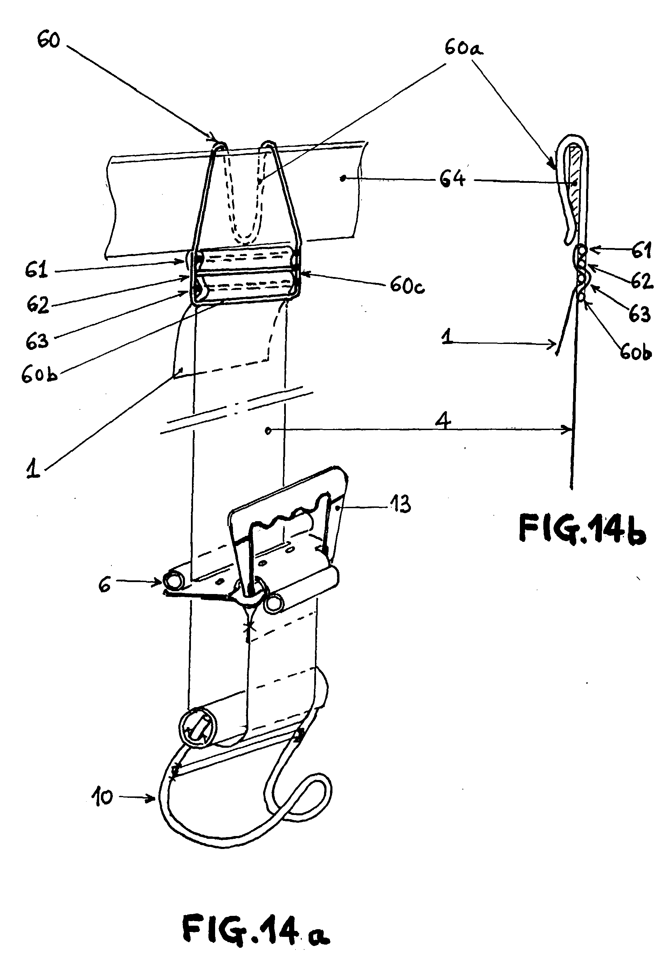

Afin de réduire la distance poignée(13)/crochet(10) pour que le paquet ne descende pas trop bas et risque alors d'entraver la marche, on peut concevoir un système de support de poignée (6) en plastique ou en métal, comme illustré par les figures 9a,9b (en vue de profil) et figure 10 (en perspective) ou encore en structure mixte plastique pour l'élément supérieur (40) et métal pour l'élément inférieur (41) comme illustré par les figures 11a et 11b.

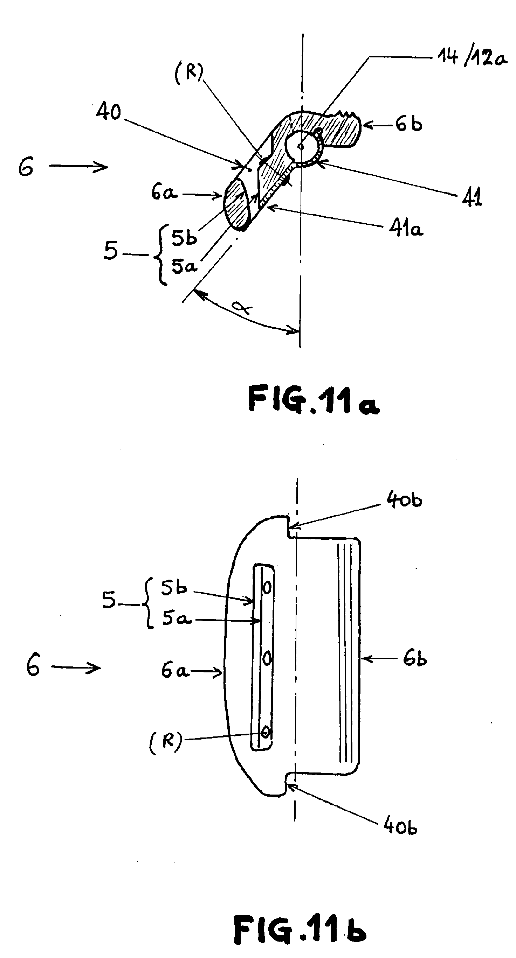

Le support (6) représenté sur ces figures en position respectivement de tirage et d'autoblocage est réalisé sous forme de deux éléments ici prévus en tôle métallique superposés (40) (41) et assemblés par exemple par rivetage (R) ou vissage, l'élément supérieur (40) étant réalisé avec une partie plane médiane prolongée vers le haut par une courbure en forme de crochet renversé permettant à l'axe (14) de la poignée (13) de prendre appui sous celle ci et pourvue d'échancrures à ses extrémités latérales servant de butée d'appui (40b) aux deux branches remontantes de la poignée (13) permettant de définir d'une part en mode tirage une orientation (α) optimum du support comprise entre 20° et 40° avec une largeur de passage de l'élément de liaison souple maximum dans le passant (5) et d'autre part en phase de passage du mode d'autoblocage au mode tirage, de permettre à la poignée de faire basculer le support (6) par appui sur ces butées (40b) lorsque celle ci est reprise par la main.
Dans cet élément supérieur (40) est également prévu en partie basse le passant (5) permettant le passage du brin (7) de l'élément de liaison souple (1) pourvu de bords arrondis. Sous cet élément supérieur est appliqué l'élément inférieur (41) dont le bord inférieur arrondi (41a) est disposé de façon décalée vers le bas par rapport au bord supérieur (5a) du passant (5) ménagé dans l'élément supérieur (40) de sorte à ce que l'élément de liaison souple (1) vienne en appui sur ce bord arrondi en position d'autoblocage par effet de coincement comme illustré en figure 9b. En partie haute de cet élément inférieur (41) du support (6) présente une découpe centrale correspondant à la largeur de l'élément de liaison souple (1) se terminant par la boucle (12), les bords latéraux de la découpe étant pliés à 90° vers l'arrière puis recourbés pour venir enfermer les extrémités de l'axe (12a/14) de la poignée (13) et de la boucle (12) de l'élément de liaison souple par rapport à la courbure supérieure de l'élément supérieur.
Ainsi selon cette variante, l'axe de de poignée (14) et l'axe (12a) de la boucle (12) sont confondus, de sorte que l'axe de la poignée (14) sert aussi d'axe de fixation à la boucle (12) de l'élément de liaison souple (1) ce qui contribue à réduire la distance poignée (13)/crochet (10) en supprimant la partie de liaison (6b) entre les deux dits axes formant bras de levier ,celle ci étant remplaçée par une partie déportée arrondie vers l'extérieur au delà de l'axe (12a/14) matérialisée sur la partie haute de l'élément supérieur par exemple par un tube rapporté (42) en métal ou par un bord enroulé servant d'appui notamment aux doigts pour commander le basculement du support (6) par pivotement vers le bas permettant de la même façon que la partie (6b) de faire levier par rapport à l'axe de la poignée pour assurer l'autoblocage et ainsi de libérer la main de soutien. La partie arrondie (5b) de l'élément supérieur (40) du support (6) située sur le côté inférieur du passant (5) permettant le passage de l'élément de liaison souple (1) est formée par un tube rapporté (43) ou par un bord enroulé et la partie opposée inclinée (5a) est constituée d'une part par une entaille (40a) débouchant sur le tube (43) de l'élément supérieur (40) servant de passage à l'élément de liaison souple (1) et d'autre part par le bord arrondi (41a) de l'élément inférieur (41) disposé en position avançée en saillie par rapport à l'entaille (40a) de l'élément supérieur de sorte à former un plan incliné servant de blocage de la partie descendante (7) de l'élément de liaison souple (1) en mode d'autoblocage ou l'élément de liaison souple suit un parcours en S de freinage et blocage.
Lorsque l'on tire la poignée (13) celle ci vient prendre appui sur les deux bords extrèmes (40b) formant butée de poignée, de l'élément supérieur (40) pour lui donner une inclinaison (α) notamment inférieure ou égale à 40° telle que l'ouverture du passant (5) matérialisé par le tube (43) l'entaille (40a) et le bord (41a), présente alors un passage maximum à la partie descendante (7) de l'élément de liaison souple (1).
Selon d'autres particularités, on peut concevoir un crochet (10) entièrement métallique, solide et de fabrication simple et économique commme illustré en figure 13.
La partie de maintien (9) est réalisée par un tube en métal (50) dans lequel on perce aux deux extrémités deux trous dans lesquels viennent se loger les deux bouts d'un crochet en fil cylindrique métallique mis en forme (51) et dont le passant (15) est constitué par un bout rectiligne de fil de même nature (52) reliant les deux côtés du fil définissant le crochet et espacé du tube d'une valeur supérieure à l'épaisseur de l'élément de liaison souple (1) pour permettre son libre passage.
Cet ensemble métallique est assemblé par soudure (55).

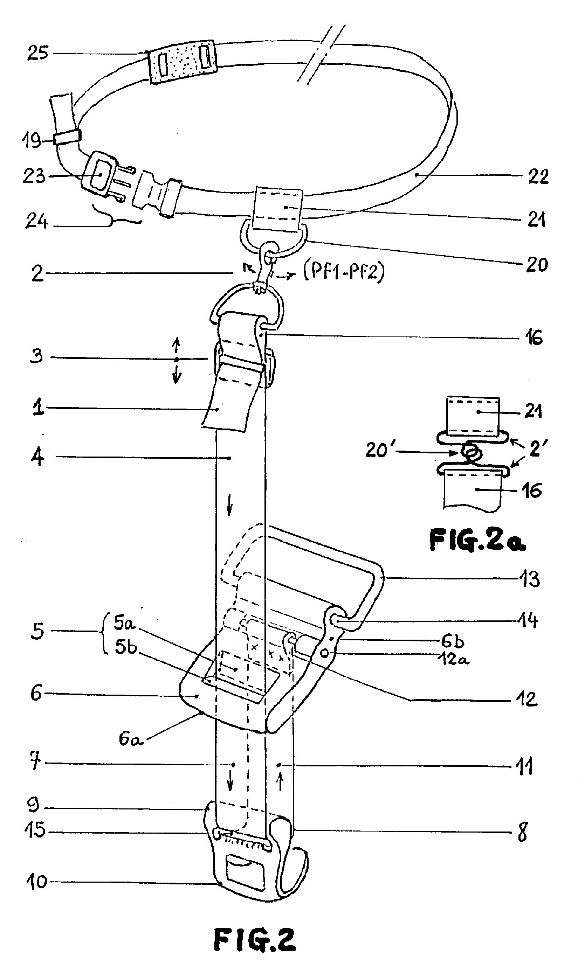

De même, le mousqueton (2) peut être remplacé par deux épingles en fil cylindrique métallique (2') en forme de porte manteau munies d'un anneau (20') (les deux anneaux étant enchevêtrés l'un dans l'autre) permettant ainsi la rotation de l'ensemble et présentant l'avantage de raccourcir la distance de l'élément de liaison souple (1) à la sangle (22) commme illustré en figure 2a.

Par ailleurs,afin de réduire le côut de fabrication de ce porte-paquets, on peut simplifier le raccordement du système à la sangle en supprimant le mousqueton (2), l'anneau (20) et le passant (21) et en réunissant directement la sangle (22) à la boucle fermée (16) de l'élément de liaison souple (1) en considérant que ce dernier est suffisament souple pour permettre sa rotation afin d'accrocher les paquets dont l'anse est perpendiculaire au corps.

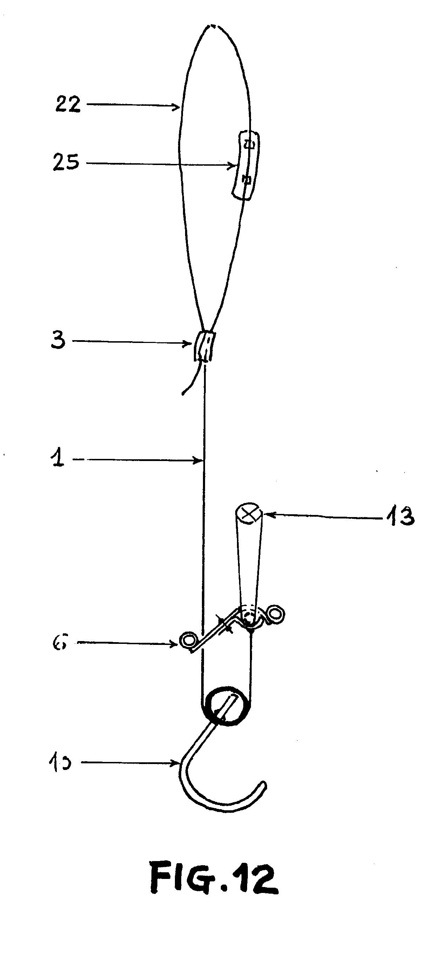

C'est ainsi que selon un autre mode de réalisation illustré en figure 12, la bandoulière ou sangle (22) peut être directement constituée par un prolongement de l'élément de liaison souple (1) en boucle relié à la double boucle de réglage (3) et de fermeture disposée le long de l'élément de liaison souple (1), le dit prolongement en bande (22) étant munie d'une patte d'épaule (25).

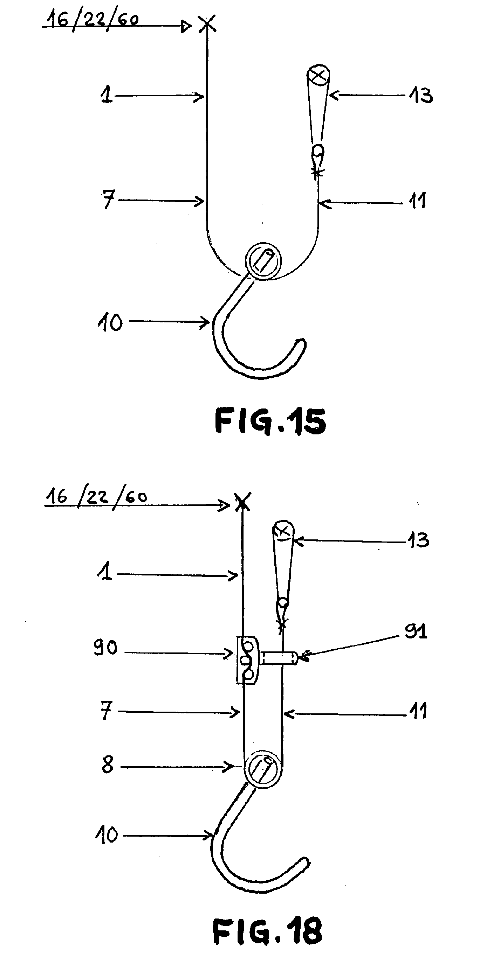

Dans le cas où l'utilisateur porte déja une ceinture, ou équivalent à savoir le bord supérieur à la taille d'un pantalon, on peut concevoir pour des questions de facilité d'utilisation de pouvoir installer et enlever le porte-paquets sur sa ceinture par l'extérieur sans avoir à passer la boucle fermée (16) prévue en partie supérieure de l'élément de liaison souple (1) dans celle ci. Il convient alors de prévoir un crochet en plastique ou en métal commme illustré sur les figures 14a et 14b. Ce crochet (60) est élaboré en fil cylindrique métallique à ressort recourbé en U et plié sur sa longueur permettant de créer un effet de ressort sur la branche (60a) du dit crochet pour se maintenir sur la ceinture existante (64) de l'utilisateur. Sur la partie inférieure des branches descendantes (60c) de ce crochet,on soude trois barreaux du même fil,striés ou moletés (61) (62) (63) entre les dites branches parallèles au dessus du brin (60b); les 4 brins parallèles ainsi crées constituent une double passant permettant à la fois de maintenir l'élément de liaison souple (1) et d'ajuster la longueur de celui ci pour régler la hauteur du support (6) et par conséquent celle de la poignée (13) à celle de la main.
L'invention n'est pas limitée au mode de réalisation tel qu'il vient d'être décrit et s'étend également à une version simplifiée telle qu'elle est illustrée sur la figure 15.

Alors simplement constituée d'un élément de liaison souple(1) pourvu à son extrémité soit d'une boucle fermée. (16) reliée à une sangle (22) ou formant elle même sangle bandoulière dans le cas où l'élément de liaison souple est prévue de grande longueur ou pourvu d'un simple crochet (60) destiné à prendre appui sur une ceinture ou la taille d'un pantalon, et à l'autre extrémité d'une poignée (13) fixée articulée ou non à l'élément de liaison souple, entre ces deux éléments est monté coulissante la partie de maintien (9) de l'objet ici constitué d'un crochet (10) .L'effet de démultiplication étant obtenue de la même façon que dans le 1er mode de réalisation.

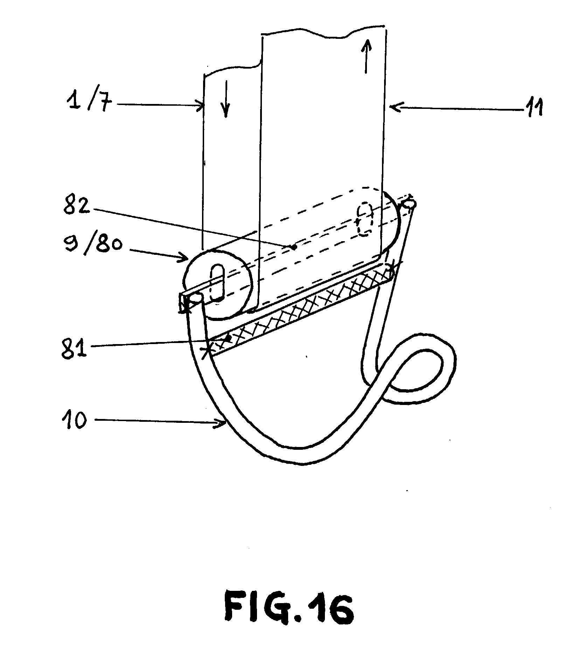

La figure 16 représente un dispositif de base identique à celui décrit précédemment mais avec un crochet (10) comportant au niveau du guidage des moyens de blocage de l'élément de liaison souple.La partie de maintien (9) est constitué en partie supérieure par un rouleau (80) monté coulissant verticalement sur une tige en forme de méplat (82) dont les extrémités de ladite tige sont reliées aux côtés supérieurs du crochet. Le passant est constitué d'une tige droite striée (81) touchant le rouleau en absence de l'élément de liaison souple. Lorsque l'élément de liaison souple(1) est installé entre le rouleau et le passant et que l'on soulève une charge,le rouleau remonte laissant un passage libre de coulissement à celui-ci. Dans le cas où on lache la poignée le rouleau (80) retombe venant coincer l'élement de liaison souple sur le passant (81) maintenant celui-ci en position.

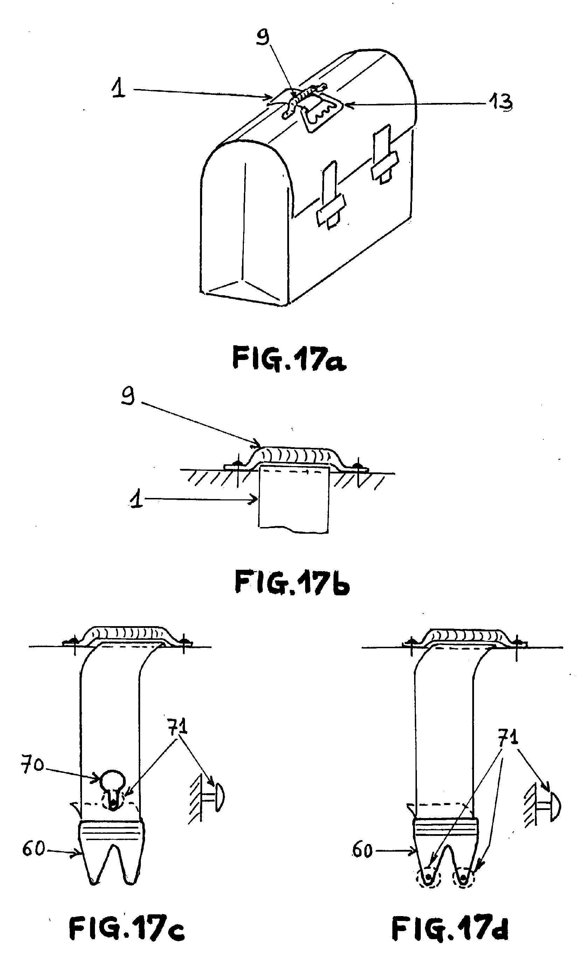

Le dispositif de base peut être appliqué aux bagages comme par exemple au sac d'écolier comme illustré en figure 17a. Dans ce cas la partie de maintien (9) est directement solidaire de la partie supérieure d'un battant du sac en lieu et place de la poignée habituelle (selon la figure 17b), celle-ci étant remplacée par la poignée (13) montée en extrémité de l'élément de liaison souple (1) maintenue en appui contre le passant par la tension de l'élément de liaison souple maintenu sur le côté du battant par des moyens d'attaches dégrafables constitués soit d'une boutonnière (70) dans l'élément de liaison souple passée autour d'un pion (71) (selon la figure 17c) soit par 2 pions sur lesquels vient s'encliqueter les 2 côtés de la boucle définie par le crochet pince (60) (selon la figure 17 d). Ce sac peut être soit porté de façon normale soit avec effet de démultiplication après dégrafage de l'élément de liaison souple puis accrochage du crochet pince à la ceinture ou à la taille puis saisie de la poignée (13).

Le dispositif de base selon un autre mode de réalisation de base de la figure 15 peut conformément à la figure 18 être équipé au niveau du brin descendant (7) de la boucle ouverte(8) défini par l'élément de liaison souple d'une attache (90) pourvue latéralement d'un large passant(91) dans lequel coulisse librement le brin remontant (11) vers la poignée (13). Le dispositif de l'attache est réglable et est constitué d'un passant double défini par 3 barrettes dans lesquels l'élément descendant est enfilé et bloqué.

En outre, en cas de non utilisation du porte- paquets on peut prévoir une pochette de rangement permettant de contenir celui ci en position enroulé sur lui même et adaptable à la ceinture pour l'avoir à disposition lors d'un voyage par exemple. A cette fin il convient de prévoir que la poignée (13) en position rabattue puisse venir se loger à l'intérieur du crochet (10) pour réduire l'encombrement et permettre l'enroulement sur ces éléments repliés de l'élément de liaison souple (1) et de la ceinture de soutien ou bandoulière (22).
On constate à l'usage du porte-paquets selon l'invention que:
- Pour soulever une charge lourde posée au sol, ce porte-paquets oblige à plier les genoux en gardant le dos droit,les jambes participent alors à l'effort de levage et ainsi soulagent le dos; ainsi l'effort exercé au niveau du dos est considérablement diminué et peut éviter une lombalgie.
- Lors du transport de paquets, ce porte-paquets réparti le poids entre le corps et la main. Il en est de même lorsque l'on monte un escalier et qu'on soulève son paquet pour éviter les marches. Le corps reste ainsi droit et la marche est équilibrée. D'une manière plus générale ce porte-paquets soulage la main, le bras, l'épaule,la colonne vertébrale et le dos de sorte que cet ensemble de postures prises automatiquement au cours de l'utilisation du dispositif évite tout risque encouru par la colonne vertébrale (pincement discal,lombalgie ...)

### DOMAINES D'UTILISATION.

Ce porte-paquets peut être utilisé chaque fois que la charge à porter est équipée d'une poignée ou partie de prise notammment pour:
- Faire ses courses (ou son marché) avec un sac à provision de préférence à deux poignées si possible rectilignes permetttant un maintien ouvert notamment en position d'autoblocage pour effectuer son remplissage les deux mains libres.
- A la maison ( port de pack d'eau, de lessive, de bidon de pétrole désaromatisé,de bouteille de gaz etc...)
- En voyage ( port de bagages, valises )
- Pour les professionnels tels que:
les livreurs, les transporteurs, les déménageurs, les maçons, peintres,pour le port de seaux de peinture de colle, de ciment, dans les étages de batiments en construction etc...

## Revendications

1. Dispositif destiné à tenir et à transporter d'une seule main au moins un paquet en suspension sans qu'il touche le sol avec réduction d'effort supporté par la main et le bras de transport du type constitué :
- d'une poignée(13)destinée à être tenue par la main
- d'une partie de maintien(9)de l'objet à transporter et
- d'un élément de liaison souple(1)relié à une extrémité à la poignée et à l'autre extrémité à une sangle(22)destinée à être supportée par une partie du corps caractèrisé en ce que la partie de maintien (9) de l'objet est indépendante de la poignée (13) et est pourvue de moyens de guidage lui permettant de coulisser librement sur l'élément de liaison souple (1) et en ce que l'élément de liaison souple présente une longueur telle que cet élément définisse au moins une boucle ouverte (8) orientée vers le bas au fond de laquelle vient s'autopositionner la partie de maintien de l'objet à supporter entre le brin descendant (7) pourvu de moyens d'attache au corps de l'utilisateur et brin remontant (11) pourvu en extrémité de la poignée (13) de sorte que par effet de démultiplication l'effort appliqué au niveau de la poignée soit de moitié de celui correspondant à celui de l'objet à transporter.

2. Dispositif selon la revendication 1) caractérisé en ce que la poignée (13) est montée sur un support(6)comportant un passant(5)monté déplaçable sur la longueur de l'élément de liaison souple unique de sorte que ce dernier définisse alors sous ce passant au moins une boucle ouverte (8).

3. Dispositif selon la revendication 2) caractérisé en ce que le dit passant (5) du support (6)comporte des moyens de blocage sur l'élement de liaison souple à la hauteur voulue sur ce dit élément,commandable à volonté lorsque l'utilisateur veut libérer sa main de la poignée.

4. Dispositif selon les revendications 1), 2), et 3) caractérisé en ce que le support de poignée (6) forme un passant (5) auto-bloquant sur l'élément de liaison souple grâce à une ouverture comportant une face inclinée (5a) ou décalée (41a) du côté intérieur compris entre les faces intérieures des parties descendante (7) et remontante (11) de l'élément de liaison souple avec une partie en pointe se terminant sur la face inférieure du support (6) et du côté extérieur une face arrondie lisse (5b)(43) en contact avec la face extérieure de la partie descendante (7) de l'élément de liaison souple.

5. Dispositif selon la revendication 4) caractérisé en ce que la poignée (13) est montée sur le support (6) de façon pivotante autour d'un axe (14) et l'extrémité de l'élément de liaison souple (1) est reliée à la poignée dans sa partie remontante (11) par l'intermédiaire d'une attache définie notamment par un repli formant une boucle (12) cousue, reçue sur un deuxième axe (12a) solidaire du support.

6. Dispositif selon la revendications 5) caractérisé en ce que les axes de la poignée (14) et de support de l'extrémité remontante de l'élément de liaison souple (12a) sont distincts et disposés parallèlement l'un par rapport à l'autre et en ce que l'axe articulé (14) de la poignée est monté en extrémité du support (6) de sorte à former cette partie (6b) du support sous forme d'un bras de levier articulé pivotant par rapport à l'axe (12a)de fixation de la boucle (12) de la partie remontante (11) de l'élément de liaison souple de façon à positionner le support (6) tel que son passant (5) présente une ouverture libre maximum à la partie descendante (7) de l'élément de liaison souple lorsque l'on tire la poignée (13).

7. Dispositif selon la revendication 5) caractérisé en ce que les axes d'articulation de la poignée (13) et de la boucle (12) de la partie remontante (11) de l'élément de liaison souple (1) sont reçus sur des axes (14) (12a) confondus et en ce que le support (6) présente en partie supérieure un prolongement (42) situé au delà des dits axes de façon décalée latéralement par rapport au plan du support (6) servant d'appui aux doigts pour provoquer le basculement du support (6) en position d'autoblocage.

8. Dispositif selon l'une quelconque des revendications de 2) à 7) caractérisé en ce que le passant (5) est bordé du côté extérieur en vis à vis du corps de l'utilisateur, en position décalée par un bord arrondi (6a) (43) obtenu par exemple par moulage ou par un tube ou un enroulé de tôle pour permettre au support (6) de ne pas accrocher les vêtements lors du tirage.

9. Dispositif selon l'une quelconque des revendications précédentes caractérisé en ce que la partie de maintien (9) de l'objet est constituée d'un passant (15) dont les bords sont de forme arrondie et lisse et en ce que la dite partie de maintien comporte à sa base un crochet (10) permettant de fixer les paquets (18) constitué par exemple en fil cylindrique métallique soudé, et d'un tube cylindrique métallique (50) constituant la partie de maintien (9) de l'objet et d'un passant (15) formé par une tige cylindrique métallique droite (52) espacée du tube et soudée de chaque côté du crochet (51).

10. Dispositif selon l'une quelconque des revendications précédentes caractérisé en ce que l'élément de liaison souple (1) comporte dans sa partie supérieure,par exemple située au dessus du passant (5) du support de poignée (6), une boucle fermée (16) permettant la réception d'une sangle (22) utilisable en bandoulière ou en ceinture par l'intermédiaire soit d'un mousqueton (2) avec anneau (20) et passant (21) soit de deux épingles (2') avec anneaux enchevêtrés (20') et passant (21), et ajustable en longueur par une double boucle (3) pour régler la hauteur de la poignée (13) de sorte à ce qu'elle corresponde à celle de la main de l'utilisateur,ou présenter une longueur suffisante de sorte à définir une grande boucle fermée formant elle même bandoulière munie de préférence d'une patte d'épaule (25) et pourvue à son extrémité opposée à celle rattachée au support (6) d'une double boucle (3) de fermeture montée réglable le long du dit élément de liaison souple (1).

11. Dispositif selon la revendication 10) caractérisé en ce que la sangle (22) possède une boucle à fermeture rapide (24) munie d'un passant de réglage (23) permettant de régler la hauteur du point d'appui fixe (Pf1-Pf2) entre l'aisselle et la hanche lors d'une utilisation en bandoulière et en ce qu'elle possède un passant ou coulant simple (19) maintenant le brin libre de la sangle et d'une patte d'épaule (25)et est réalisée en matériau de type coton ou synthétique strié ayant une bonne adhérence au contraire de l'élément de liaison souple réalisé en fils de polyester du type utilisé sur les ceintures de sécurité automobile, de sorte à présenter un très bon coefficient de glissement par rapport au passant du crochet et le cas échéant du passant du support.

12. Dispositif selon l'une quelconque des revendications de 1) à 9) utilisable avec une sangle (22) constituée directement d'une ceinture ou d'un bord supérieur de pantalon de l'utilisateur, caractérisé en ce que la partie supérieure de l'élément de liaison souple (1) sortant du passant (5) du support (6) comporte un crochet (60) ouvert vers le bas, sous forme de pince, destiné à venir s'accrocher à cheval sur la dite ceinture ou sur le dit bord supérieur du pantalon, et pourvu en partie inférieure d'un double passant défini par 4 barrettes (61) (62) (63) (60a) dans lesquelles l'élément de liaison souple (1) est maintenu de façon réglable permettant d'ajuster la hauteur de la poignée (13) et le cas échéant de son support.

13. Dispositif selon la revendication 1) applicable à la réalisation de sacs d'écoliers, de porte-documents, de sacs et de valises caractérisé en ce que le système est intégré extérieurement au bagage, la partie formant poignée dudit bagage est conformée de sorte à constituer le passant (15) de la partie de maintien (9) par laquelle passe l'élément de liaison souple (1) dont l'extrémité pourvue de la poignée (13) destinée à être tenue à la main vient en butée sur un des côtés dudit passant tandis que son autre extrémité destinée à être reliée à une sangle par exemple par crochet(60) à une ceinture supportée par une partie du corps de l'utilisateur est attachée à la surface dudit bagage par exemple par agrafage de façon à ce que l'élément de liaison souple soit tendu en position de non utilisation du système et dégrafé lorsque le bagage est maintenu en suspension entre la poignée et l'extrémité de l'élément de liaison souple rattachée au corps.

14. Dispositif selon la revendication 1) caractérisé en ce que la partie de maintien de l'objet (9) comporte au niveau de ses moyens de guidage en coulissement sur l'élément de liaison souple (1) des moyens d'autoblocage en position sur ledit élément s'opposant à sa descente dans le cas où la poignée est relachée par l'utilisateur par effet de coincement et friction.

15. Dispositif selon la revendication 1) caractérisé en ce que l'élément de liaison souple comporte sur la longueur de son brin descendant d'un élément d'attache (90) pourvu du côté extérieur d'un passant large (91) dans lequel passe librement le brin remontant (11) vers la poignée (13) de l'élément de liaison souple,ladite poignée étant pourvue à sa base de moyens destinés à venir en butée sur le bord supérieur dudit passant lorsque la poignée est relâchée par l'utilisateur constituant ainsi un moyen de blocage en position de la partie de maintien de l'objet.

16. Dispositif selon la revendication 15) caractérisé en ce que l'élément d'attache (90) du passant large (91) est réglable en position sur le brin descendant (7) et est par exemple constitué d'un passant double défini par 3 barrettes dans lesquelles est enfilé le brin descendant de l'élément de liaison souple.
